# EUROPEAN PATENT APPLICATION

(11) **EP 4 631 400 A1**
(43) Date of publication of application: **15.10.2025**
(21) Application number: 25169746.2
(22) Date of filing: 10.04.2025
(51) Int. Cl.: A47F 3/04, F25D 23/02, F25D 27/00, F25D 29/00

(54) **REFRIGERATOR**

(30) Priority: 11.04.2024 KR 20240048925
(71) Applicant: LG Electronics Inc., Yeongdeungpo-gu Seoul 07336 (KR)
(72) Inventor: JI, Sunkook, Seoul (KR); CHU, Yunsu, Seoul (KR)
(74) Representative: Ter Meer Steinmeister & Partner

(57) **Abstract**

The present disclosure relates to a refrigerator and the refrigerator includes a cabinet having a storage space formed therein; a door opening and closing the storage space; and a hinge connecting the door and the cabinet, in which the door includes: a front panel forming a front surface of the door and allowing light to pass through; a door liner provided at a rear of the front panel and forming a rear surface of the door; an upper cap forming an upper surface of the door and to which the hinge is axially coupled; a first manipulation detection device provided inside the door and detecting the proximity of a user; and a second manipulation detection device provided inside the door and detecting the operation of a user, a PCB on which both the first manipulation detection device and the second manipulation detection device are mounted is provided inside the door, and an electrical wire connected to the PCB is guided to the outside of the door through the hinge.

## Description

### ;BACKGROUND

The present disclosure relates to a refrigerator.

In general, a refrigerator is a home appliance that can store food at low temperatures in an internal storage space that is shielded by a door. To this end, the refrigerator is configured to cool the inside of the storage space by using cold air generated through heat exchange with a refrigerant that circulates a refrigeration cycle, thereby allowing the stored food to be stored in an optimal condition.

Recently, refrigerators are becoming larger and more multifunctional in line with the changing eating habits and the trend toward higher quality products, and refrigerators equipped with various structures and convenient devices for the convenience of users and efficient use of internal space are being released.

For example, various electrical components including various sensors, heaters, and lights can be installed on the refrigerator door to provide various functions. In addition, electrical wires connecting these electrical components can be guided to the cabinet side through the hinge of the door.

However, as the number of electrical components increases, the diameter of the hinge shaft through which the electrical wires pass increases, which causes the door corners to protrude more, which may cause problems such as interference with neighboring walls and furniture during the rotation of the door.

In addition, there is a problem that a separate electrical wire arrangement structure is required for a plurality of electrical wires to pass through in order to prevent interference when the door is opened.

### SUMMARY

An object of an embodiment of the present disclosure is to provide a refrigerator in which all electrical wires connected to a plurality of electrical components inside a door can be guided to a cabinet by passing through a hinge shaft.

An object of an embodiment of the present disclosure is to provide a refrigerator that prevents interference of door corners when the door rotates by reducing the number of electrical wires connected to electrical components inside the door.

An object of an embodiment of the present disclosure is to provide a refrigerator in which it is easy to arrange a plurality of manipulation detection devices.

The object is solved by the features of the independent claims. Preferred embodiments are given in the dependent claims.

A refrigerator according to an embodiment of the present disclosure includes a cabinet having a storage space formed therein; a door opening and closing the storage space; and a hinge connecting the door and the cabinet, in which the door may include a front panel forming a front surface of the door and allowing light to pass through; a door liner provided at a rear of the front panel and forming a rear surface of the door; an upper cap forming an upper surface of the door and to which the hinge is axially coupled; a first manipulation detection device provided inside the door and detecting the proximity of a user; and a second manipulation detection device provided inside the door and detecting the operation of a user, a PCB on which both the first manipulation detection device and the second manipulation detection device are mounted may be provided inside the door, and an electrical wire connected to the PCB may be guided to the outside of the door through the hinge.

The first manipulation detection device may be a capacitance sensor that may detect the proximity of a user's body.

The second manipulation detection device may be a vibration detection sensor that detects the user's knocking manipulation.

The capacitance sensor and the vibration detection sensor may be arranged toward the front panel.

The electrical wire may include a power line, a signal line, and a ground line.

The door may be provided with an opening device for restraining and releasing the door.

The opening device may operate according to a signal from the first manipulation detection device.

The door liner may include a PCB opening in which the PCB is exposed rearward.

A PCB cover that shields the PCB and the PCB opening may be mounted on the PCB opening.

The PCB may include a connector to which the electrical wire is detachably connected.

The PCB may include a service connector for checking the states of the PCB and the detection devices, and the service connector may be exposed through the PCB opening.

The connector may be provided on an upper end of the PCB.

The service connector may be provided below the connector.

The connector and the service connector may be arranged on one surface of the two sides of the PCB facing the PCB opening.

The door liner may further include a gasket groove that is recessed along the perimeter of the rear surface of the door and in which a gasket is mounted.

The PCB opening may be arranged to overlap the gasket groove.

The PCB cover may be formed with a cover stepped part that is connected to the gasket groove and is in contact with the gasket.

The door liner may include a PCB mounting part that is recessed toward the front panel in the PCB opening to form a space in which the PCB is accommodated.

A guide hole may be formed on one side of the front surface of the PCB mounting part corresponding to the first manipulation detection device.

The guide hole may be shielded by the front panel.

A guide part may be formed around the guide hole extending forward and being in contact with the rear surface of the front panel.

The first manipulation detection device may be located within the guide hole.

A boss may be formed on the front surface of the PCB mounting part to which a screw penetrating the PCB is fastened.

The first manipulation detection device and the guide hole may be aligned with each other when the screw is fastened.

The door may include a panel assembly that shields the opening of the door liner and allows the rear space of the door to be seen through.

The panel assembly may include the front panel; a rear panel spaced apart from the front panel and forming the rear surface of the door; and a spacer that is arranged along the perimeters of the front panel and the rear panel and connects between the front panel and the rear panel.

An insulation may be arranged along the perimeter of the panel assembly inside the door.

The door liner may include a PCB mounting part that is recessed forward to form a space in which the PCB is independently positioned from the insulation, and the PCB mounting part may be provided between the spacer and the side surface of the door.

The PCB mounting part may be provided on one side of the left and right sides of the panel assembly and formed on one side of the left and right sides farthest from the rotation shaft of the door.

The first manipulation detection device may be located at a height of 1 m to 1.5 m from the ground.

The following effects can be expected from the refrigerator according to the proposed embodiment.

In a refrigerator according to an embodiment of the present disclosure, even when a plurality of electrical components are arranged inside the door, the number of electrical wires guided into the door can be reduced by arranging a plurality of detection devices on the PCB so that the electrical wires can be shared. Accordingly, even when a plurality of electrical components are provided, all electrical wires can be guided into the door by passing through the hinge pin.

In particular, the electrical wires can pass through the hinge pin without increasing the diameter of the hinge pin. Accordingly, the diameter of the hinge pin is maintained, and the edge part of the door adjacent to the hinge pin is prevented from protruding, thereby preventing the corner part of the door from hitting an adjacent wall, furniture, or other home appliance when the door is rotated to open or close.

In addition, instead of individually arranging the manipulation detection devices that detect the user's proximity and knocking manipulation, the manipulation detection devices are arranged on a single PCB, so that the installation of the manipulation detection devices can be completed by mounting only a single PCB. Accordingly, the assembly workability can be improved and productivity can be enhanced. In particular, since it is possible to connect power and transmit signal to the manipulation detection devices through a single electrical wire connection, the assembly productivity can be further improved.

### BRIEF DESCRIPTION OF THE DRAWINGS

FIG. 1 is a front view illustrating a refrigerator of the first embodiment of the disclosure.
FIG. 2 is a perspective view illustrating the refrigerator with the door open.
FIG. 3 is a front view illustrating the door.
FIG. 4 is a rear view illustrating the door.
FIG. 5 is an exploded perspective view illustrating the door as seen from the front.
FIG. 6 is an exploded perspective view illustrating the door as seen from the rear.
FIG. 7 is an enlarged view illustrating part A of FIG. 5.
FIG. 8 is a partial perspective view illustrating the PCB mounting part of the door.
FIG. 9 is an enlarged view illustrating part B of FIG. 6.
FIG. 10 is a cutaway perspective view taken along line 10-10 of FIG. 4.
FIG. 11 is a cutaway perspective view taken along line 11-11 of FIG. 4.
FIG. 12 is a view illustrating the electrical wire layout inside the door.
FIG. 13 is a block diagram schematically illustrating the signal flow of the refrigerator.
FIG. 14 is a front view illustrating a refrigerator door of a second embodiment of the disclosure.
FIG. 15 is a perspective view illustrating a refrigerator of a third embodiment of the disclosure.
FIG. 16 is a perspective view illustrating the refrigerator with the door open.
FIG. 17 is a perspective view illustrating a refrigerator of a fourth embodiment of the disclosure.

### DETAILED DESCRIPTION OF THE EMBODIMENTS

Hereinafter, specific embodiments of the present disclosure will be described in detail with reference to the drawings. However, the present disclosure is not limited to the embodiments in which the idea of the present disclosure is presented, and other regressive disclosures or other embodiments included within the scope of the idea of the present disclosure can be easily proposed by adding, changing, deleting, or the like other components.

Also, in describing components of embodiments of the present disclosure, terms such as first, second, A, B, (a), (b), or the like may be used. These terms are only intended to distinguish the components from other components, and the nature, order, or sequence of the components is not limited by the terms. When it is described that a component is "connected," "coupled," or "accessed" to another component, it should be understood that the component may be directly connected or accessed to the other component, but another component may also be "connected," "coupled," or "accessed" between each component.

In general, refrigerators can be divided into various types according to the divided form of the storage space and the arrangement and structure of the door. In the following, for the convenience of explanation and understanding, a refrigerator with the storage space divided into upper and lower parts will be described as an example, but the present disclosure is not limited thereto and can be applied to all types of refrigerators equipped with doors.

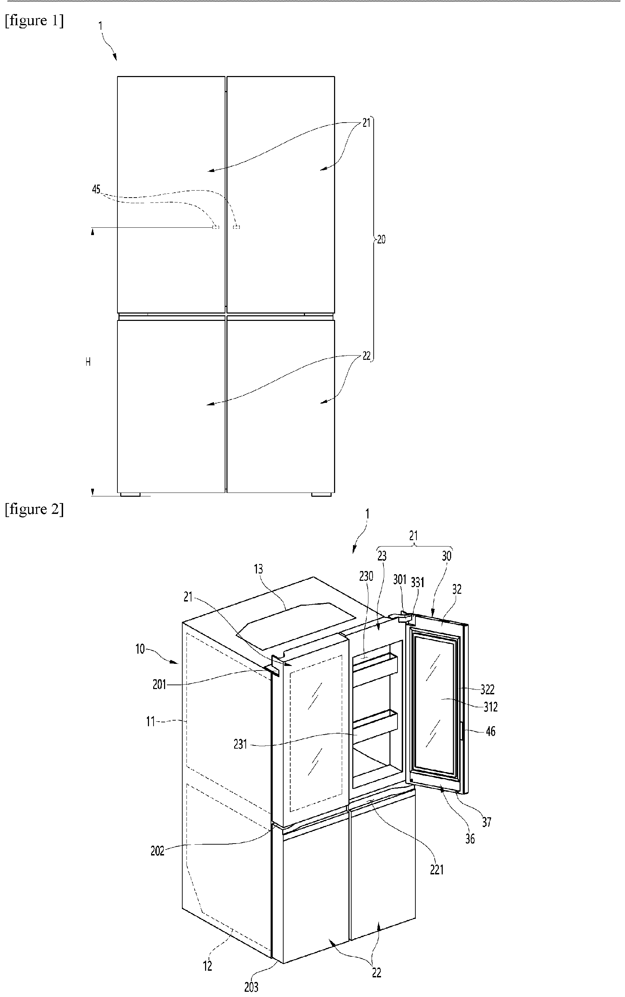

Before explanation, the direction is defined. In an embodiment of the present disclosure, the direction in which the front surface of the door as illustrated in FIG. 1 faces may be defined as a front direction, the direction toward the cabinet based on the front surface of the door may be defined as a rear direction, the direction toward the floor surface on which the refrigerator is installed may be defined as a lower direction, and the direction away from the floor surface may be defined as an upper direction.

FIG. 1 is a front view illustrating a refrigerator according to the first embodiment of the present disclosure, and FIG. 2 is a perspective view illustrating the refrigerator with the door open.

As illustrated, the refrigerator 1 according to an embodiment of the present disclosure may have the overall outer appearance thereof formed by a cabinet 10 forming a storage space and a door 20 for opening and closing the cabinet 10.

The cabinet 10 can be partitioned so that the storage space is divided vertically to form an upper storage space 11 and a lower storage space 12. For example, the upper storage space 11 may be a refrigerating compartment, and the lower storage space may be a freezing compartment.

The door 20 may be configured to open and close the storage space and may include an upper door 21 for opening and closing the upper storage space 11 and a lower door 22 for opening and closing the lower storage space 12.

The upper door 21 and lower door 22 can be arranged as a pair on each of the left and right sides, and can be configured to be opened and closed by rotation. In other words, the upper storage space 11 can be opened and closed by a pair of upper doors 21, and the lower storage space 12 can be opened and closed by a pair of lower doors 22.

The door 20 can be connected to the cabinet 10 by a hinge device 201, 202, 203 and can be rotated. For example, the upper end of the upper door 21 can be connected to the cabinet 10 by an upper hinge 201. In addition, the lower end of the upper door 21 and the upper end of the lower door 22 can be connected to the cabinet 10 by a middle hinge 202. In addition, the lower end of the lower door 22 can be connected to the cabinet 10 by a lower hinge 203.

In addition, at least one of the upper doors 21 may be formed as a double door structure (door in door structure) that is covered with each other. For example, the upper door 21 on the right side of the upper doors 21 may include a main door 23 that opens and closes the upper storage space 11 and a sub door 30 that rotates in the same direction as the main door 23 in front of the main door 23. Such a double door structure may also be provided on the left door and the lower door 22 of the upper doors 21.

An opening 230 may be formed in the main door 23. The opening 230 may penetrate the main door 23 in the front and rear direction, and may be formed to occupy most of the area except for the perimeter of the main door 23. In addition, the opening 230 may communicate with the interior of the upper storage space 11, and a separate storage device such as a door basket 231 may be provided in the opening 230.

In addition, the sub-door 30 is positioned in front of the main door 23 and can be rotatably mounted on the main door 23. Accordingly, the opening 230 can be opened and closed by the rotation of the sub-door 30.

To this end, the sub-door 30 and the main door 23 may be connected by a hinge 301. The sub-door 30 may be rotatably mounted on the main door 23 by the hinge 301. The hinge 301 may connect the upper end of the main door 23 and the upper end of the sub-door 30. The hinge 301 may include a hinge plate 301a and a hinge pin 301b made of a metal material. In addition, the hinge 301 may further include a hinge cover 301c made of a plastic material that shields the hinge plate 301a.

The sub-door 30 may be formed to have the same horizontal and vertical width as the main door 23. Accordingly, when the sub-door 30 is closed, it may appear to be formed as one piece with the main door 23, and when viewed from the front, it may appear to be formed as one door.

Meanwhile, the sub-door 30 may be equipped with a door opening device 36 for opening and closing the sub-door 30. In addition, a first manipulation detection device 45 for manipulating the door opening device 36 may be equipped. For example, the first manipulation detection device 45 detects the proximity of a user, and when the user's hand approaches one side of the front surface of the door, the door opening device 36 may be operated to open the door 20. As another example, the first manipulation detection device 45 may be a touch sensor, and may detect the user's touch manipulation of one side of the front of the door 20. The first manipulation detection device 45 may be referred to as a proximity detection device, a touch detection device, or a touch sensor.

The first manipulation detection device 45 may be positioned above the floor on which the refrigerator 1 is installed, at a set height H. For example, the set height H may be positioned at a height of approximately 1 m to 1.5 m. The first manipulation detection device 45 may be positioned at a height that is easy to recognize when a user approaches and naturally places his or her hand thereto. In addition, the first manipulation detection device 45 may be positioned on one side of the left and right sides of the door 20, that is, far from the rotation shaft of the door 20, that is, the extension line of the hinge pin 301b. Accordingly, when a user approaches and places his or her hand thereto to open the door 20, the door 20 may be opened naturally.

Hereinafter, the structure of the sub-door 30 will be examined in more detail with reference to the drawings. In addition, the present disclosure can be applied to the upper door of the single door structure, and can be applied to all doors of a rotatable type. In addition, for the convenience of understanding and explanation, the sub-door 30 will be described below as a reference and will be referred to as a door 20.

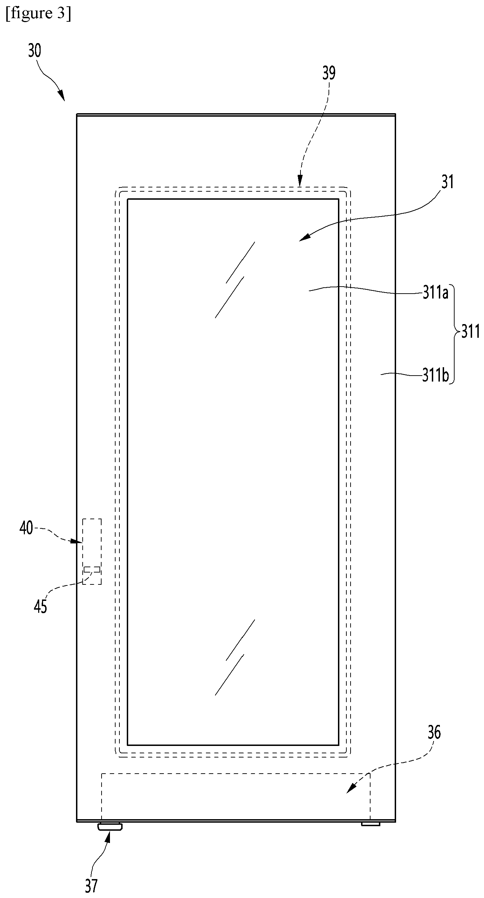

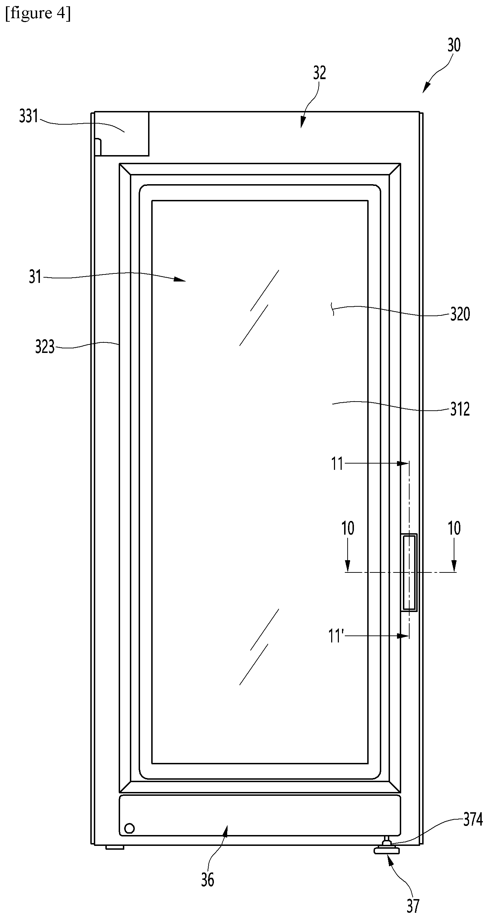

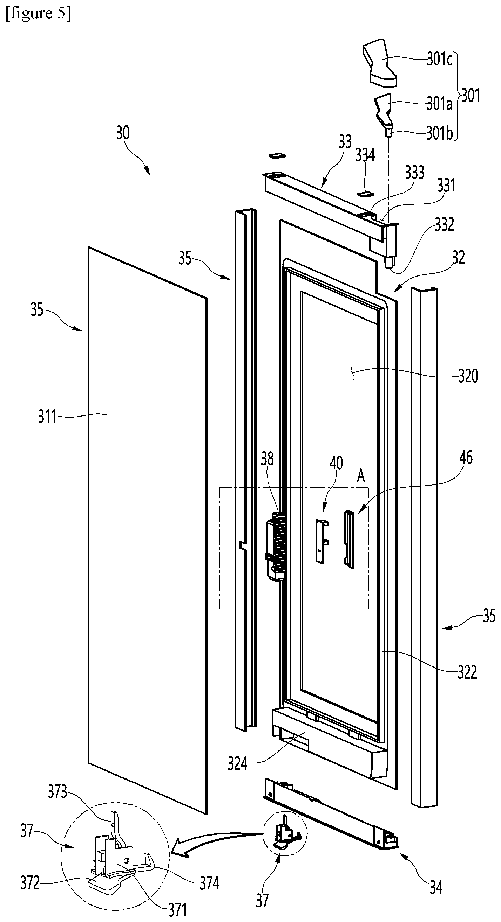

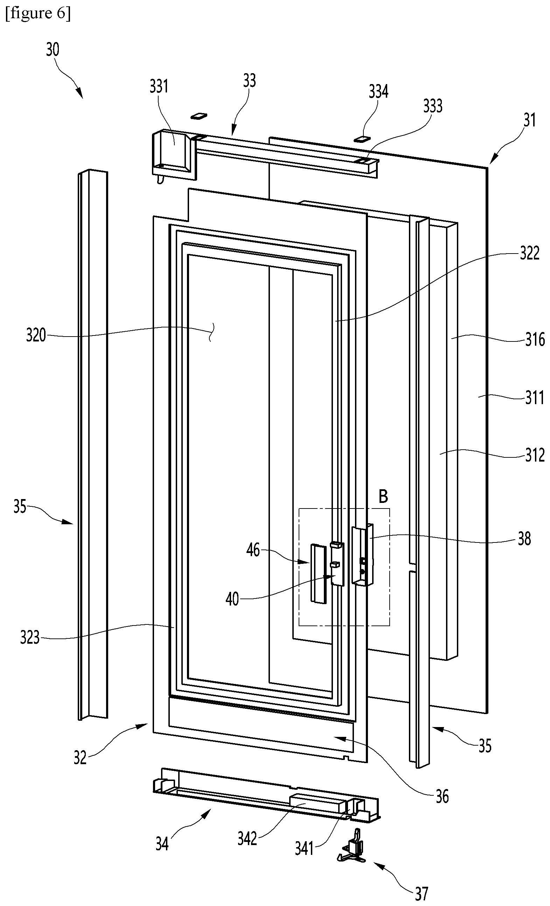

FIG. 3 is a front view illustrating the door, FIG. 4 is a rear view illustrating the door, FIG. 5 is an exploded perspective view illustrating the door as seen from the front, and FIG. 6 is an exploded perspective view illustrating the door as seen from the rear.

As illustrated, the door 20 may include a panel assembly 31 forming the front surface, a door liner 32 forming the rear surface, an upper cap 33 forming the upper surface and a lower cap 34 forming the lower surface of the door 20. In addition, the door 20 may further include a side frame 35 forming the left and right sides.

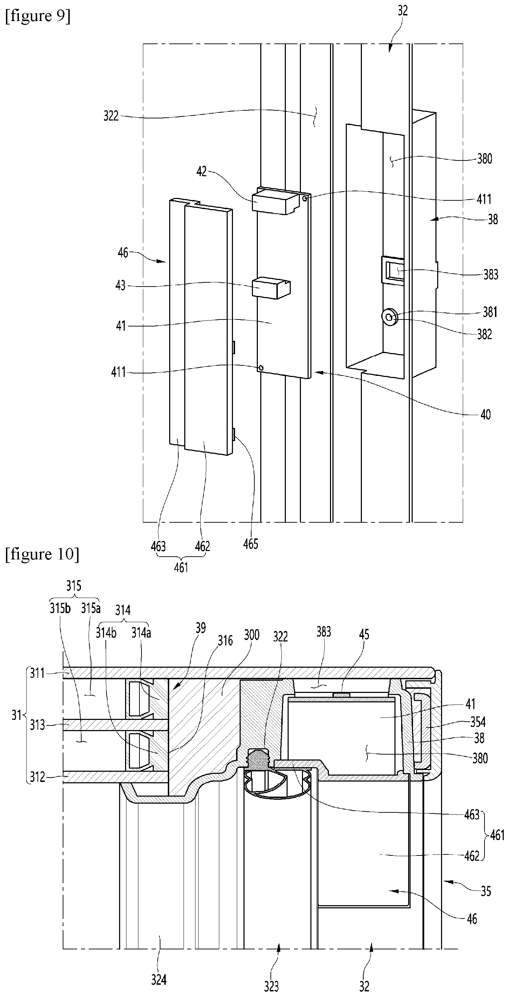

In addition, the inside of the door 20 can be filled with insulation 300. For example, a foaming liquid can be injected into the inside of the space formed by the coupling of the panel assembly 31, the door liner 32, the upper cap 33, the lower cap 34, and the side frame 35 to form the insulation 300. In particular, as illustrated in FIG. 10, the panel assembly 31 can be composed of a plurality of panels 311, 312, 313, and the insulation 300 can be filled in the space between the outer side of the panel assembly 31 and the outer surface of the door 20.

The panel assembly 31 may include a front panel 311 formed of a tempered glass material. The front panel 311 may be formed of a material that allows light to pass through. The panel assembly 31 may further include a rear panel 312 provided at the rear of the front panel 311. The rear panel 312 may form a part of the rear surface of the door 20 and may shield a liner opening 320 formed in the door liner 32.

The front panel 311 and the rear panel 312 may be formed of a transparent material. For example, the front panel 311 and the rear panel 312 may be formed of a tempered glass or insulating glass material. Accordingly, the front panel 311 and the rear panel 312 may be formed to allow the rear space of the door 20 to be seen through. In other words, the panel assembly 31 is formed transparently so that the rear space of the door 20 can be seen through.

The panel assembly 31 is arranged along the perimeter of the front panel 311 and the rear panel 312, and may include a spacer 314 that forms an airtight space between the front panel 311 and the rear panel 312. In addition, an insulating layer 315 may be formed between the front panel 311 and the rear panel 312. For example, the insulating layer 315 may be in a vacuum state or in a state where an insulating gas is injected.

The front panel 311 may be formed larger than the rear panel 312. For example, the front panel 311 may form the entire front surface of the door 20. The front panel 311 may include a see-through part 311a that sees through the rear space of the door, and a bezel part 311b formed along the perimeter of the see-through part 311a. The bezel part 311b may be formed opaquely, and may shield the components outside the see-through part 311a, including the spacer 314, the electrical wire 47 to be described below, and the PCB mounting part 38, from the front.

In addition, the rear panel 312 can be formed at a position away from the front panel 311 toward the rear, and can shield the liner opening 320 of the door liner 32. In addition, the space between the front panel 311 and the rear panel 312 can be formed by the spacer 314.

The door liner 32 may be formed of a plastic material. The door liner 32 may have a liner opening 320 formed in the center. The liner opening 320 may be formed to a size corresponding to the rear panel 312. Accordingly, the door liner 32 may form the rear surface of the door 20, and may form a surface between the outer side of the liner opening 320 and the perimeter of the door 20.

The door liner 32 may be equipped with a gasket 323. The gasket 323 may seal the space between the door 20 and the storage space when the door 20 is closed. The gasket 323 may be equipped in a gasket groove 322 formed along the perimeter of the liner opening 320.

**In** addition, an opening device mounting part 324 on which a door opening device 36 is mounted may be formed at the lower part of the door liner 32. The door opening device 36 may be operated by the first manipulation detection device 45 and may be configured to open the door 20.

For example, the door opening device 36 may be equipped with a driving part such as a motor that provides power inside, and the power of the driving part may be transmitted to operate a locking device 37 that restrains the door 20. At this time, the operation of the driving part may be performed by detection by the first manipulation detection device 45. The door opening device 36 and the locking device 37 may have various structures.

For example, the locking device 37 may be connected to the door opening device 36. **In** addition, the locking device 37 may be provided at the lower end of the door 20. **In** addition, the locking device may be positioned above the handle 221 of the lower door 22. The locking device 37 may be positioned on one of the left and right sides of the door 20 that is farther from the hinge shaft.

The locking device 37 may include a case 371 provided on the door 20, an manipulation lever 372 rotatably mounted on the case 371, a hook 374 that is caught and restrained on the main door 23 or cabinet 10 by the manipulation of the manipulation lever 372, and a lever connection part 373 that is connected to the door opening device 36. Accordingly, the manipulation lever 372 is operated by the operation of the door opening device 36, and the restraint of the hook 374 is released so that the door 20 can be opened.

The manipulation lever 372 may be exposed at the lower end of the door 20, and the remaining components may be placed inside the door 20. Accordingly, the user may also be able to release the restraint of the door 20 and open the door by directly manipulating the manipulation lever 372.

The upper end and the lower end of the door liner 32 and the front panel 311 may be connected by the upper cap 33 and the lower cap 34. A locking device mounting part 341 on which the locking device 37 is mounted may be formed on the lower cap 34. A handle 342 may be recessed into the lower surface of the lower cap 34. The handle 342 may be arranged to be in contact with the locking device 37. In other words, the handle 342 and the locking device 37 may be arranged continuously at adjacent positions to facilitate the release of restraint and opening manipulation of the door 20. The manipulation lever 372 may also be arranged on the handle 3.

In addition, a hinge mounting part 331 that is recessed so that the hinge 301 is mounted may be formed in the upper cap 33. In addition, a hinge hole 332 into which a hinge pin 301b of the hinge 301 is inserted may be formed in the hinge mounting part 331. The door 20 may be rotated about the hinge pin 301b as an axis. In addition, the hinge pin 301b may be formed in a hollow tubular shape, and thus may form a passage through which electrical wires 47 of electrical components inside the door 20 pass.

In addition, the left and right sides of the door liner 32 and the front panel 311 can be connected by the side frame 35. With the door liner 32, the upper cap 33, the lower cap 34, and the side frame 35 coupled, the panel assembly 31 is mounted to form the front surface of the door 20, and the liner opening 320 can be shielded. In addition, with the door liner 32, the upper cap 33, the lower cap 34, the side frame 35, and the panel assembly 31 all assembled, the foaming liquid can be injected through the injection port 333 of the upper cap 33 to form the insulation 300. In addition, the upper cap 33 can be equipped with an injection port cap 334 that shields the injection port 333.

Meanwhile, the door 20 may be equipped with a manipulation detection device 40 for detecting the user's manipulation. The manipulation detection device 40 may be composed of a plurality of different types of detection devices 44, 45. Accordingly, the user may manipulate the door 20 in various ways. In addition, the manipulation detection device 40 is arranged inside the door 20 and is not exposed to the outside.

The manipulation detection device 40 can be placed on a single-component PCB 41 and can be provided in a PCB mounting part 38 recessed in the door liner 32. In addition, the opened rear surface of the PCB mounting part 38 can be covered with a PCB cover 46.

Below, the arrangement structure of the manipulation detection device 40 and the PCB 41 will be described in more detail with reference to the drawings.

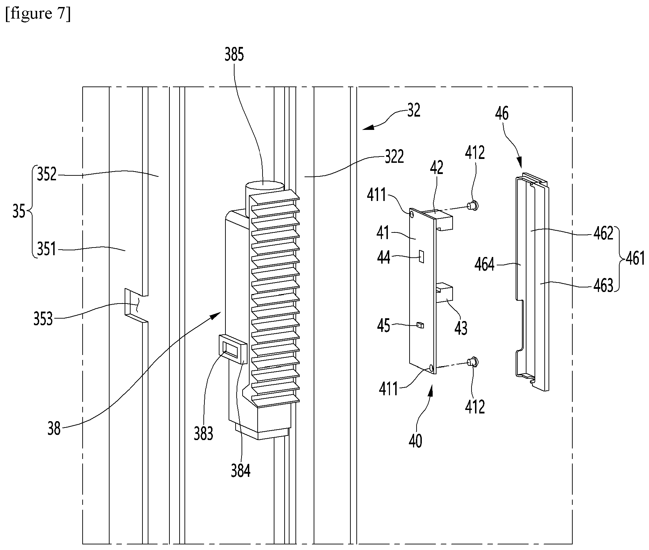

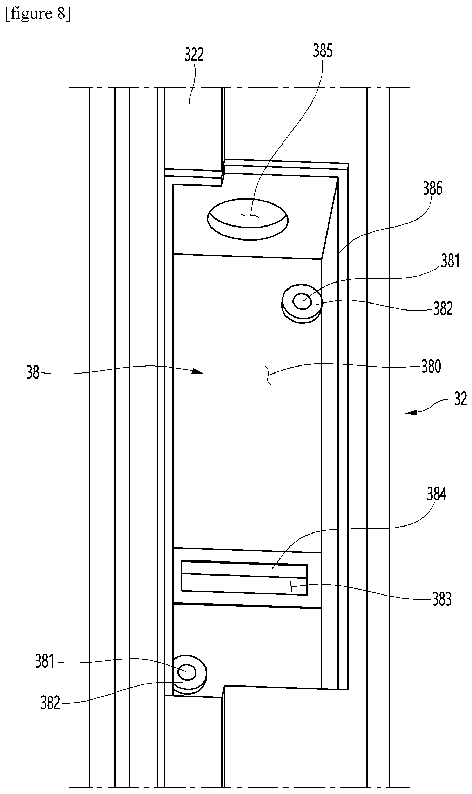

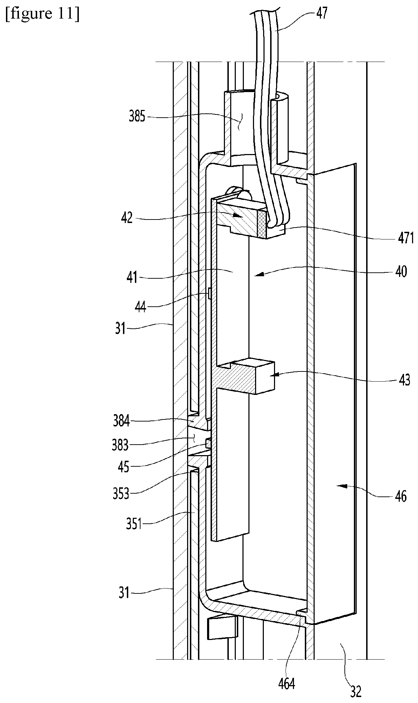

FIG. 7 is an enlarged view illustrating part A of FIG. 5, FIG. 8 is a partial perspective view illustrating the PCB mounting part of the door, FIG. 9 is an enlarged view illustrating part B of FIG. 6, FIG. 10 is a cutaway perspective view taken along line 10-10 of FIG. 4, and FIG. 11 is a cutaway perspective view taken along line 11-11 of FIG. 4.

As illustrated, a plurality of the manipulation detection devices 40 may be arranged on a single PCB 41. For example, the manipulation detection device 40 may include a first manipulation detection device 45 and a second manipulation detection device 44.

The above first manipulation detection device 45 is intended to detect the proximity of a user's body and can detect the user approaching one side of the door 20 to open the door 20. For example, the first manipulation detection device 45 may be a capacitance sensor.

Accordingly, it is possible to detect a change in the magnetic field that occurs when the user's body is positioned in proximity to the first manipulation detection device 45. The door opening device 36 can be operated by detection by the first manipulation detection device 45, and the door 20 can be opened. As another example, the first manipulation detection device 45 may be a proximity sensor that detects the proximity of a user through light or ultrasonic irradiation.

The first manipulation detection device 45 may be provided at a position corresponding to the position when the user raises his hand to operate the door. For example, the first manipulation detection device 45 may be positioned at a set height H from the ground on which the refrigerator 1 is placed.

The second manipulation detection device 44 is configured to detect a user's knocking manipulation and to detect vibrations generated when a user knocks the panel assembly 31. For example, the second manipulation detection device 44 may be a vibration sensor. Of course, the second manipulation detection device 44 may be another detection device capable of detecting a user's manipulation in addition to a vibration sensor.

The second manipulation detection device 44 may be directly or indirectly connected to the front panel 311. Accordingly, the vibration generated when the user knocks on the front panel 311 can be detected to detect the user manipulation. When the user manipulation is detected by the second manipulation detection device 44, the lighting device 15, 27 provided on the door 20 or cabinet 10 is turned on to illuminate the rear space of the door 20, and the rear space of the door 20 can be seen through the see-through part. In other words, the lighting device 15, 27 can be turned on and off by the second manipulation detection device 44.

As another example, the second manipulation detection device 44 may be a microphone. The second manipulation detection device can detect the sound generated when the user knocks on the front panel 311 to detect the user manipulation and turn the lighting device 15, 27 on and off.

The first manipulation detection device 45 and the second manipulation detection device 44 can both be placed on the front surface of the PCB 41. In other words, when the PCB 41 is mounted on the door 20, the first manipulation detection device 45 and the second manipulation detection device 44 can face the rear surface of the front panel 311. In addition, the first manipulation detection device 45 and the second manipulation detection device 44 can be placed adjacent to the rear surface of the front panel 311.

The first manipulation detection device 45 and the second manipulation detection device 44 can be mounted on a single PCB 41. Therefore, power can be supplied and signals can be transmitted to both the first manipulation detection device 45 and the second manipulation detection device 44 through an electrical wire 47 connected to the PCB 41. For example, the electrical wire 47 connected to the PCB 41 can be a power line, a signal line, and a ground line. Therefore, a plurality of manipulation detection devices 40 mounted on the PCB 41 can be operated by three electrical wires 47 connected to the PCB 41.

In addition, the PCB 41 may be provided with a connector 42 to which the electrical wire 47 is connected. The connector 42 may be configured so that the electrical wire 47 can be detachably connected to the PCB without a separate tool. To this end, an electrical wire connector 471 that can be coupled with the connector 42 may be further provided at the end part of the electrical wire 47. Accordingly, by simply coupling the electrical wire connector 471 and the connector 42, the plurality of electrical wires can be electrically connected to the PCB 41 at once.

The connector 42 can be positioned toward the direction in which the electrical wire 47 is introduced. The connector 42 can be provided at the upper end of the PCB 41, and the electrical wire 47 can be connected at the shortest distance.

The connector 42 may be provided on the upper rear surface of both sides of the PCB 41. In addition, a service connector 43 may be provided below the connector 42. Both the service connector 43 and the connector 42 may be provided on the rear surface of the PCB 41.

The service connector 43 is used to check the state of the PCB 41 and the manipulation detection devices 44, 45, and can be configured so that an operator can connect the PCB 41 while it is mounted on the door 20. The service connector 43 can be provided at approximately the center of the PCB 41. In addition, the service connector 43 can overlap at least a part of the PCB opening 380 formed in the rear case 371. Therefore, when the PCB cover 46 is opened, the service connector 43 can be exposed through the PCB opening 380.

The door 20 may be formed with a PCB mounting part 38 that accommodates the PCB 41. The PCB mounting part 38 forms a space that is opened toward the rear and is recessed toward the front so that the PCB 41 can be placed inside. In addition, the PCB 41 may be placed in a space separated from the space in which the insulation 300 is placed inside the door 20 by the PCB mounting part 38. In other words, the insulation 300 may be prevented from penetrating into the inside of the PCB mounting part 38.

The PCB mounting part 38 may be provided on one side of the left and right sides of the door 20, and may be provided on one side farther from the rotation shaft of the door 20 among the left and right sides. In addition, the PCB mounting part may be located at the middle point in the upper and lower directions of the door 20.

The PCB mounting part 38 is opened at the rear surface of the door 20 and can be recessed into the front panel 311. Accordingly, the manipulation detection devices 44, 45 mounted on the PCB 41 can be placed close to the front panel 311.

For example, the PCB mounting part 38 may be formed in the door liner 32. The PCB mounting part 38 may be formed such that one side of the door liner 32 is recessed toward the front. In addition, the PCB opening 380 corresponding to the opened rear surface of the PCB mounting part 38 may be formed in the door liner 32.

The PCB mounting part 38 may overlap at least a part of the gasket groove 322. The gasket groove 322 is formed along the perimeter of the liner opening 320 and may be arranged to pass through the PCB mounting part 38. In addition, a part of the gasket groove 322 may be shortcircuited by the PCB opening 380. Therefore, when the PCB cover 46 that shields the PCB opening 380 is mounted, a part of the PCB opening may form a part of the gasket groove 322.

Accordingly, when the gasket 323 is mounted, the gasket 323 is mounted along the gasket groove 322 of the door liner 32, and a part of the gasket 323 may be positioned to pass through the PCB cover 46. At this time, the PCB cover 46 may further have a cover stepped part 463 formed that is connected to the gasket groove 322 and comes into contact with the gasket 323.

The PCB cover 46 may include a cover body 461. The cover body 461 is formed in a shape corresponding to the PCB opening 380 and may shield the PCB opening 380. In a state where the PCB cover 46 shields the PCB opening 380, the PCB cover 46 may form the same surface as the door liner 32.

The cover body 461 may be formed in steps and may include a cover stepped part 463 through which the gasket 323 passes and a cover exposure part 462 that is exposed laterally to the gasket 323. In addition, a cover support part 464 that protrudes forward may be protruded from the front surface of the cover body 461. The cover support part 464 may be in contact with the inner surface of the PCB mounting part 38.

In addition, a cover protrusion 465 for mounting the cover body 461 may be formed on the side of the cover body 461. The cover protrusion 465 may be in contact with the inner surface of the PCB opening 380 when mounting the PCB cover 46 so that the PCB cover 46 may be maintained in a restrained state.

The PCB mounting part 38 may be arranged in the space between the side end of the panel assembly 31 and the outer surface of the door 20. In other words, the PCB mounting part 38 may be provided between the spacer 314 forming the peripheral surface of the panel assembly 31 and the side frame 35. In addition, the PCB mounting part 38 may be arranged at the rear of the bezel part 311b. In addition, the electrical wire 47 extending to the PCB mounting part 38 is also provided at the rear of the bezel part 311b so as not to be exposed through the front panel 311. In addition, a reinforcing frame 354 made of steel may be further formed on the inner surface of the side frame 35. The PCB mounting part 38 may be arranged spaced apart from the side of the reinforcing frame 354.

The panel assembly 31 may include the front panel 311, the rear panel 312, and the spacer 314. At this time, an intermediate panel 313 may be further provided between the front panel 311 and the rear panel 312, and a first insulation layer 315a and a second insulation layer 315b may be formed between the front panel 311 and the intermediate panel 313 by the intermediate panel 313.

In addition, the spacer 314 may be arranged along the perimeter of the front surface and the rear surface of the intermediate panel 313. The spacer 314 may include a first spacer 314a connecting the front panel 311 and the intermediate panel 313, and a second spacer 314b connecting the intermediate panel 313 and the rear panel 312. In addition, a sealant 316 may be applied to the perimeter of the panel assembly 31 to seal the insulating layers 315.

The PCB mounting part 38 is recessed forward, and the recessed front surface may be adjacent to the rear surface of the front panel 311. In addition, a frame opening 353 may be formed in the side frame 35 so that the PCB mounting part 38 may be in contact with the front panel 311 without interference. For example, the side frame 35 may include a panel support part 351 that supports the front panel 311, and a side part 352 that extends rearward from an outer end of the panel support part 351 and is connected to the door liner 32. In addition, the frame opening 353 may be formed in the panel support part 351. Therefore, the guide part 384 may pass through the frame opening 353 and be in contact with the front panel 311.

An electrical wire hole 385 into which the electrical wire 47 is introduced may be formed on the upper surface of the PCB mounting part 38. The electrical wire hole 385 may be positioned facing the connector 42 so that the electrical wire 47 introduced through the electrical wire hole 385 may be easily connected to the PCB 41.

A boss 382 having a fastening hole 381 to which a screw 412 penetrating the PCB 41 is fastened may be formed on the front surface of the PCB mounting part 38. A plurality of bosses 382 may be formed, and may be spaced apart from each other in the vertical direction. For example, one boss 382 may be formed at each of the upper and lower diagonal corners of the PCB 41. The screw 412 is fastened so as to penetrate the screw hole 411 of the PCB 41, and may be fastened to the boss 382 so that the PCB 41 is firmly fixed within the PCB mounting part 38.

The boss 382 can protrude to a predetermined height so that the PCB 41 is spaced apart from the front surface of the PCB mounting part 38. In addition, by fastening the screw 412, the PCB 41 can be placed in an accurate position within the PCB mounting part 38.

In addition, a guide hole 383 may be formed on the front surface of the PCB mounting part 38. The guide hole 383 may penetrate the front surface of the PCB mounting part 38 at a position corresponding to the first manipulation detection device 45.

When the screw 412 is fastened to the PCB 41, the PCB 41 is fixed to the PCB mounting part 38, and at this time, the first manipulation detection device 45 can be aligned at a position corresponding to the guide hole 383. Accordingly, the first manipulation detection device 45 can be positioned within the guide hole 383.

The PCB mounting part 38 may further be formed with a guide part 384 that protrudes forward along the circumference of the guide hole 383. The protruding end part of the guide part 384 may be in contact with the rear surface of the front panel 311. Accordingly, the first manipulation detection device 45 may be positioned within the closed space formed by the guide part 384, and may effectively detect a change in the magnetic field due to the proximity of the user.

Meanwhile, the second manipulation detection device 44 may be in contact with the front surface of the PCB mounting part 38. In addition, the PCB mounting part 38 may be directly or indirectly connected to the front panel 311. Therefore, when the user knocks on the front panel 311, vibration may be transmitted to the second manipulation detection device 44.

In another embodiment, the first manipulation detection device 45 and the second manipulation detection device 44 may have different arrangement positions than in the above-described embodiment.

The first manipulation detection device 45 and the second manipulation detection device 44 can both be placed on one PCB 41. In addition, the first manipulation detection device 45 and the second manipulation detection device 44 can both be placed on the same surface of the PCB 41 facing the front panel 31.

The first manipulation detection device 45 may be a device that detects the proximity of a user. In addition, the second manipulation detection device 44 may be a device that detects knocking or contact with the front surface of the door 20.

In addition, the first manipulation detection device 45 and the second manipulation detection device 44 may be spaced apart from each other in the vertical direction. At this time, the first manipulation detection device 45 may be positioned above the second manipulation detection device 44. In addition, the distance between the first manipulation detection device 45 and the second manipulation detection device 44 may be greater than the detection range of the first manipulation detection device 45. In other words, the second manipulation detection device 44 may be positioned below the first manipulation detection device 45, but outside the detection range of the first manipulation detection device 45. Therefore, when a user operates the first manipulation detection device 45 or the second manipulation detection device 44, it is possible to prevent the user's operation from being misrecognized.

For example, when a user knocks on the front surface of the door 20, the second manipulation detection device 44 detects this and turns on the door light 27 so that the rear space of the door 20 can be seen through.

At this time, the first manipulation detection device 45 that detects the proximity of the user is positioned above the second manipulation detection device 44 and is outside the detection distance of the first manipulation detection device 45, so that the user's hand for operating the first manipulation detection device 45 is not detected.

Accordingly, even if a user stands in front of the door 20 and knocks or touches the front surface of the door 20 to manipulate the second manipulation detection device 44, unintended operations such as the door opening device 36 being operated due to the first manipulation detection device 45 being misrecognized by the user's hand can be prevented.

In this way, by considering the user manipulation detection characteristics of the first manipulation detection device 45 and the second manipulation detection device 44, the user's convenience can be improved and manipulation reliability can be guaranteed by positioning the first manipulation detection device 45 outside the detection range of the second manipulation detection device 44.

Below, the arrangement of electrical wires 47 in a refrigerator 1 having the above structure is described.

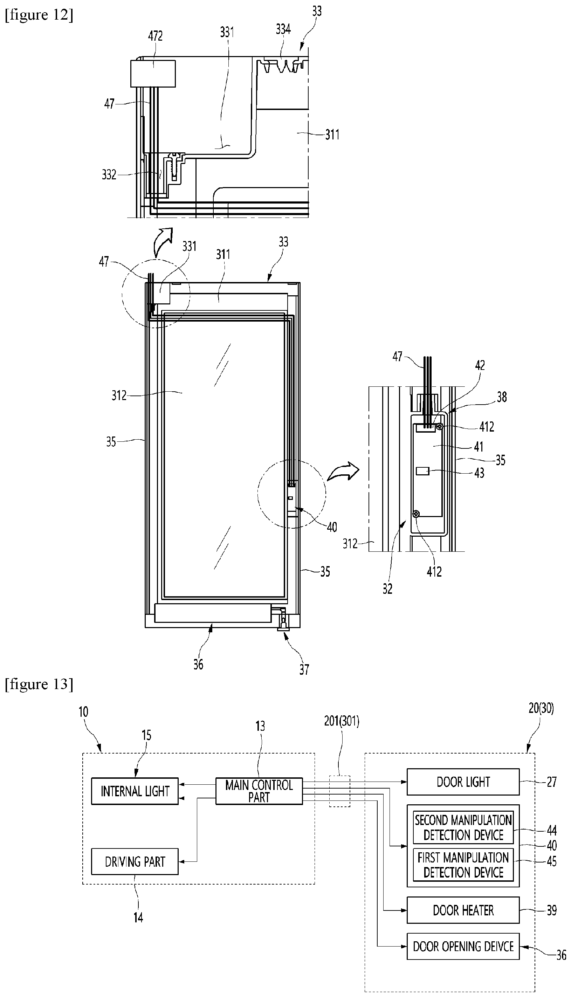

FIG. 12 is a view illustrating the electrical wire layout inside the door, and FIG. 13 is a block diagram schematically illustrating the signal flow of the refrigerator.

As illustrated, the cabinet 10 is equipped with a main control part 13, and the driving part 14 is controlled through the main control part 13, so that the overall operation of the refrigerator 1 can be controlled and power can be supplied. In addition, the main control part 13 is connected to the internal light 15 equipped in the cabinet 10 so as to control the internal light 15.

In addition, the electrical wires 47 connecting the main control part 13 and the electrical components inside the door 20 can pass through the hinge 301 and be introduced into the inside of the door 20. At this time, the electrical wires 47 can pass through the hinge pin 301b that serves as the rotation shaft of the door 20 and be introduced into the inside of the door 20.

For example, the electrical components arranged on the door 20 may include the door opening device 36, the PCB 41, the door heater 39, and the door light 27. Of course, the electrical components may further include other electrical devices arranged on the door 20. The door heater 39 may be operated to prevent condensation from occurring on the front surface of the panel assembly 31. The door heater 39 may be arranged on the back surface of the front panel 311. In addition, the door heater 39 may be arranged along the outer perimeter of the spacer 314. The door light 27 illuminates the rear space of the door 20, and when the door light 27 is turned on, the rear space of the door 20 may be visible through the panel assembly 31. Meanwhile, the door light 27, door heater 39 and door opening device 36 may be omitted as needed.

The first manipulation detection device 45 and the second manipulation detection device 44 may be arranged on the PCB 41. In addition, an electrical wire 47 may be connected to the PCB 41. At this time, the electrical wire 47 may be connected to a power line, a signal line, and a ground line. Accordingly, power supply and control for the operation of the first manipulation detection device 45 and the second manipulation detection device 44 may be possible by one power line and one signal line.

Accordingly, compared to the structure in which electrical wires are respectively connected to the first manipulation detection device 45 and the second manipulation detection device 44, the number of electrical wires can be reduced by half. In particular, when a plurality of electrical components are arranged within the door 20, the electrical wires connected to the electrical components can all pass through the limited inner diameter of the hinge pin 301b.

The electrical wire 47 can be introduced into the inside of the door 20 through the hinge hole 332 of the hinge mounting part 331, extended through the upper part of the door 20 to the side end of the door 20, and extended downward from the side end of the door 20 to pass through the electrical wire hole 385 and be guided into the inside of the PCB mounting part 38. The electrical wire 47 guided into the inside of the PCB mounting part 38 can be connected to the connector 42 of the PCB 41.

In addition, the electrical wire 47 can be arranged along the area covered by the bezel part 311b, and the PCB mounting part 38 is also positioned in the area covered by the bezel part 311b so as not to be exposed to the outside.

An electrical wire connector 472 may be further provided at an end part of the electrical wire 47 exposed to the outside of the hinge mounting part 331. The electrical wire connector 472 may be connected to an electrical wire 47 extending from the cabinet 10. The door 20 can be separated from the cabinet 10 by the electrical wire connector 472, and after mounting the door 20, the electrical wire 47 on the cabinet 10 side and the electrical wire 47 on the door 20 side can be easily connected.

Meanwhile, the present disclosure may have various other embodiments in addition to the above-described embodiments. Other embodiments of the present disclosure may have the same configurations except for some configurations, and detailed descriptions and illustrations of the same configurations may be omitted. In addition, the same configurations may be indicated using the same drawing symbols.

Below, a description will be given focusing on configurations that are different from the embodiments of the present disclosure, and configurations that are not illustrated or omitted can be understood through the embodiments described above.

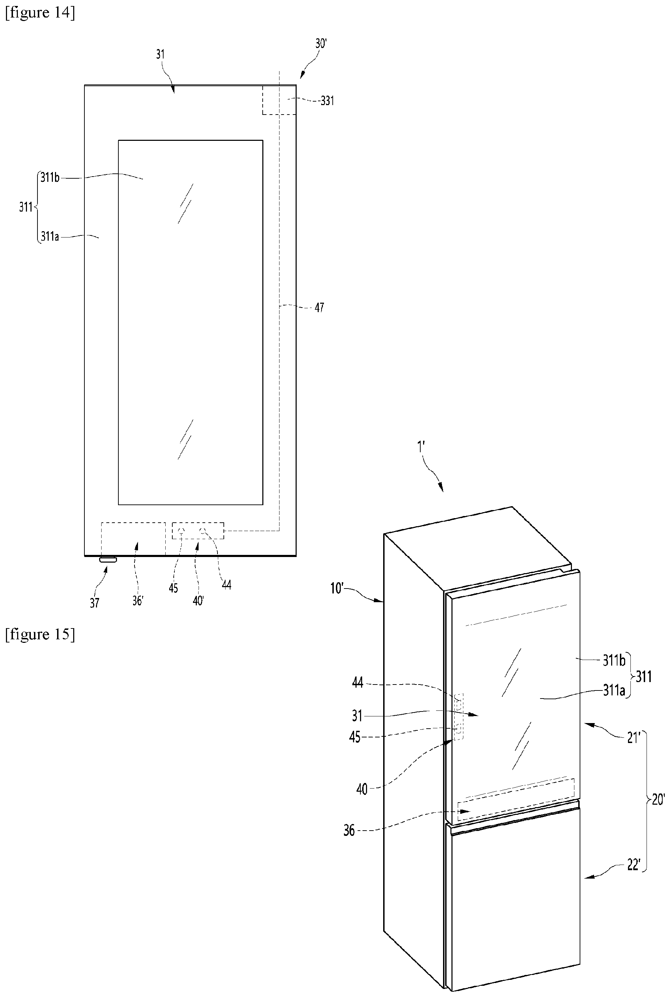

FIG. 14 is a front view illustrating a refrigerator door according to a second embodiment of the present disclosure.

As illustrated, the refrigerator 1 according to the second embodiment of the present disclosure may include a door 30' for opening and closing the storage space of the cabinet 10.

The door 30' may include a panel assembly 31. In addition, the front surface of the door 30' may be formed by the front panel 311. The front panel 311 may be formed of a glass material, and a see-through part 311a may be formed in the center, and an opaque bezel part 311b may be formed along the edge of the see-through part 311a.

An upper cap 33 and a lower cap 34 may be provided at the upper end and the lower end of the door 30'. In addition, a hinge mounting part 331 on which a hinge 301 is mounted may be formed recessed in the upper cap 33. In addition, a locking device 37 for opening and closing the door 30' may be provided at the lower cap 34. In addition, a door opening device 36' for operating the locking device 37 may be provided at one end of the lower part of the door 30'.

In addition, a manipulation detection device 40' may be provided at the lower part of the door 30'. The manipulation detection device 40' may be provided with a PCB 41 equipped with a first manipulation detection device 45 and a second manipulation detection device 44. In addition, a PCB mounting part 38 for accommodating the PCB 41 may be further formed inside the door 30'. The PCB 41 may be positioned at a position that does not interfere with the door opening device 36. The PCB 41 may be positioned between the lower end of the door 30' and the lower end of the see-through part 311a.

For example, the PCB 41 may be positioned at the lower center of the door 30'. As another example, the PCB 41 may be positioned at a side farther from the rotation shaft of the door 30' with respect to the center of the door 30'. Accordingly, when a user approaches to open the door 30' or when the user's body comes close, the first manipulation detection device 45 can effectively detect this.

In addition, the electrical wire 47 connected to the PCB 41 is guided downward through the hinge mounting part 331 and can be extended from the lower end of the door 30' toward the PCB 41 to be connected to the PCB 41.

At this time, both the electrical wire 47 and the PCB 41 can be positioned at the rear of the bezel part 311b. Therefore, the PCB 41 and the electrical wire 47 may not be exposed through the front panel 311.

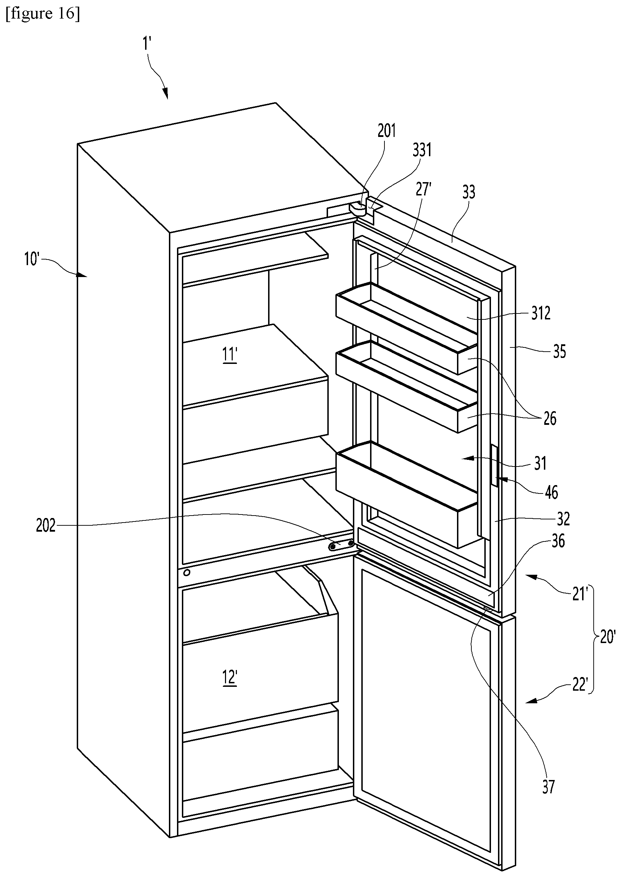

FIG. 15 is a perspective view illustrating a refrigerator according to a third embodiment of the present disclosure, and FIG. 16 is a perspective view illustrating the refrigerator with the door open.

As illustrated, a refrigerator 1' according to a third embodiment of the present disclosure may include a cabinet 10' forming a storage space and a door 20' for opening and closing the storage space.

The storage space of the cabinet 10' can be partitioned vertically to form an upper storage space 11' and a lower storage space 12'. In addition, the door 20' can include an upper door 21' for opening and closing the upper storage space 11' and a lower door 22' for opening and closing the lower storage space 12'. Unlike the double door of the above-described embodiment, the door 20' is configured as a single door to open and close the storage space.

The upper door 21' may be rotatably coupled to the cabinet 10 by a hinge 201, 202. The hinge 201 may have the same structure as the hinge 301 of the above-described embodiment, and may include a hinge plate 301a and a hinge pin 301b. In addition, an electrical wire 47 introduced into the interior of the door may pass through the hinge pin 301b. The upper door 21' may include a panel assembly 31 through which the interior may be seen through. In addition, a storage member such as a door basket 26 may be provided at the rear of the upper door 21'.

Through the panel assembly 31, even when the upper door 21' is closed, the user can check the rear space of the upper door 21. In addition, in order to visualize the rear space of the upper door 21', door lights 41' may be provided on both left and right sides of the rear surface of the upper door 21', and the rear space of the upper door 21' may be selectively visualized by turning the door lights 41' on and off. To this end, the door lights 41' may be arranged on both left and right sides of the see-through part 311a and may be mounted on the door liner 32 forming the rear surface of the upper door 21.

The panel assembly 31 may include a front panel 311 forming the front surface of the upper door 21' and a rear panel 312 forming the rear surface. In addition, a see-through part 311a that can see through the rear space may be formed in the center of the front panel 311, and a bezel part 311b may be formed along the perimeter of the see-through part 311a.

The upper door 21' may include an upper cap 33 forming an upper surface and a lower cap 34 forming a lower surface. A hinge mounting part 331 on which the hinge 301 is mounted may be recessed into the upper cap 33. The electrical wire 47 of the cabinet 10 may pass through the hinge 301 and the hinge mounting part 331 and be introduced into the interior of the upper door 21'.

The upper door 21' may include a door liner 32 forming a rear surface. The door liner 32 may be formed along the perimeter of the rear panel 312. The rear panel 312 may shield a liner opening 320 formed in the door liner 32. In addition, the left and right sides of the upper door 21' may be formed by a side frame 35.

A door opening device 36 and a locking device 37 may be provided at the lower part of the upper door 21'. The door opening device 36 may be operated by a first manipulation detection device 45. In addition, the locking device 37 may be selectively restrained on one side of the front surface of the cabinet 10'. The locking device 37 may be operated by the door opening device 36 and may selectively open the upper door 21'. In other words, the upper door 21' may be automatically opened by the operation of the door opening device 36.

A manipulation detection device 40 may be provided inside the upper door 21'. The manipulation detection device 40 may include a PCB 41 equipped with a first manipulation detection device 45 and a second manipulation detection device 44. The PCB 41 may be arranged in a space between the perimeter of the panel assembly 31 and the side surface of the upper door 21'. In addition, the PCB 41 may be arranged upward by a set height H from the ground. In addition, the PCB 41 may be formed on one side of the left and right sides of the upper door 21' that is farther from the rotation shaft of the upper door 21. In addition, the PCB 41 may be arranged at the rear of the bezel part 311b so as not to be exposed through the front panel 311.

The door liner 32 may be equipped with a PCB cover 46. The PCB cover 46 may be formed at a position corresponding to the PCB 41. Therefore, when the PCB cover 46 is opened, the PCB 41 may be exposed. Assembly, installation, and inspection of the PCB 41 may be possible with the PCB cover 46 opened.

Meanwhile, the electrical wire 47 of the cabinet 10' can pass through the hinge mounting part 331 and the hinge 201 and be introduced into the interior of the upper door 21'. Then, it can be extended along the upper part and the side end of the upper door 21' and connected to the PCB 41. At this time, the first manipulation detection device 45 and the second manipulation detection device 44 can be supplied with power and transmit signals through the electrical wire 47 connected to the PCB 41.

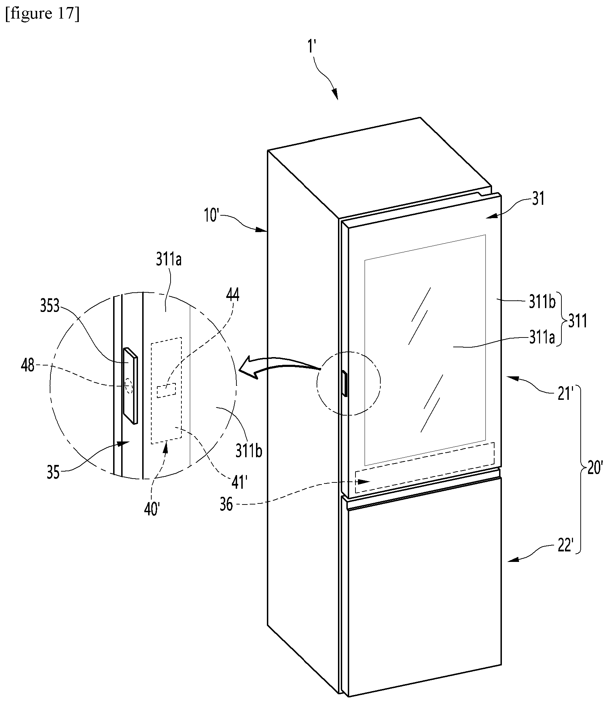

FIG. 17 is a perspective view illustrating a refrigerator according to a fourth embodiment of the present disclosure.

As illustrated, a refrigerator 1' according to the fourth embodiment of the present disclosure may include a cabinet 10' forming a storage space and a door 20' for opening and closing the storage space.

The structure of the cabinet 10' and door 20' may be the same as the structure of the third embodiment described above or the structure of any one of the embodiments described above.

The upper door 21' can be rotatably coupled to the cabinet 10 by a hinge 201, 202. In addition, an electrical wire 47 introduced into the interior of the upper door 21' can pass through the hinge pin 301b. The upper door 21' can include a panel assembly 31 through which the interior can be seen through. In addition, a storage member such as a door basket 26 can be provided at the rear of the upper door 21'.

Even when the upper door 21' is closed, the user can check the rear space of the upper door 21 through the panel assembly 31. In addition, the upper door 21' may be equipped with a door light 27', and the rear space of the upper door 21' may be selectively visualized by turning the door light 27' on and off.

The panel assembly 31 may include a front panel 311 forming the front surface of the upper door 21' and a rear panel 312 forming the rear surface. In addition, a see-through part 311a that can see through the rear space may be formed in the center of the front panel 311, and a bezel part 311b may be formed along the perimeter of the see-through part 311a.

A hinge mounting part 331 on which the hinge 301 is mounted can be recessed into the upper end of the upper door 21'. The electrical wire 47 of the cabinet 10 can pass through the hinge 301 and the hinge mounting part 331 and be introduced into the interior of the upper door 21'.

The upper door 21' may be equipped with a door opening device 36 and a locking device 37. The door opening device 36 may be operated by a first manipulation detection device 45. In addition, the locking device 37 may be selectively restrained on one side of the front surface of the cabinet 10'. The locking device 37 may be operated by the door opening device 36 and may selectively open the upper door 21'. In other words, the upper door 21' may be automatically opened by the operation of the door opening device 36.

A manipulation detection device 40" may'be provided inside the upper door 21'. The manipulation detection device 40 may include a PCB 41' equipped with a first manipulation detection device 48 and a second manipulation detection device 44.

The PCB 41' may be placed in the space between the perimeter of the panel assembly 31 and the side surface of the upper door 21'. In addition, the PCB 41' may be placed upward from the ground by a set height H. In addition, the PCB 41' may be formed on one side of the left and right sides of the upper door 21' that is farther from the rotation shaft of the upper door 21'. In addition, the PCB 41' may be placed at the rear of the bezel part 311b so as not to be exposed through the front panel 311.

The PCB 41' may be equipped with both a first manipulation detection device 48 and a second manipulation detection device 44. At this time, the first manipulation detection device 48 and the second manipulation detection device 44 may be arranged in different directions. In addition, the first manipulation detection device 48 and the second manipulation detection device 44 are devices capable of detecting a user's manipulation and may be configured as different types.

For example, the first manipulation detection device 48 may be placed toward the side of the door 21'. The first manipulation detection device 48 may be a touch sensor, and a capacitance sensor or piezoelectric touch sensor may be used.

The first manipulation detection device 48 may be formed to protrude rearward from the side end of the PCB 41'. In addition, if necessary, the shape of the PCB 41' may be formed such that the first manipulation detection device 48 faces the side surface of the door 21'.

The first manipulation detection device 48 is provided inside the door 21' and can be in close contact with the side of the door 21'. Accordingly, when a user touches a corresponding position on the side surface of the door 21', the first manipulation detection device 48 can detect it. For example, the first manipulation detection device 48 can be mounted on a side frame 35 forming the side surface of the door.

Meanwhile, a protrusion 353 may be formed on the side surface of the door 21' where the first manipulation detection device 48 is arranged, and guides the user to perform touch manipulation at an accurate location. The side frame 35 may be formed of a metal material. In addition, the protrusion 353 may be exposed by protruding laterally from the side surface of the side frame 35. In addition, the first manipulation detection device 48 may be arranged on the inside of the protrusion 353.

Of course, if necessary, the protrusion 353 may not be formed on the side surface of the door 21' and the position of the first manipulation detection device 48, that is, the touch position, may be indicated by surface processing or printing, or the like, capable of indicating the position.

The second manipulation detection device 44 is mounted on the PCB 41' and may be positioned so as to face the front surface of the door 21'. The second manipulation detection device 44 may be positioned so as to come into contact with the front panel 311 so as to more effectively detect a knocking manipulation of the front panel.

In this way, the first detection device 48 and the second detection device 44 can be arranged to face different directions. In addition, the first manipulation detection device 48 can be arranged on the side surface of the door 21', and the second manipulation detection device 44 can be arranged on the front surface of the door 21'.

The second manipulation detection device 44 detects the user's knocking manipulation on the front surface of the door 21' and may be configured with a vibration detection sensor or a microphone. The second manipulation detection device 44 may be the same as the second manipulation detection device 44 of the above-described embodiment.

Since the first manipulation detection device 48 and the second manipulation detection device 44 are positioned to face different directions, there is an advantage in that user misoperation can be prevented and manipulation reliability can be guaranteed.

In other words, by placing the first manipulation detection device 48 on the side surface of the door 21' and the second manipulation detection device 44 on the front surface of the door 21', the sensing direction for detecting the user's manipulation can be distinguished. Accordingly, the first manipulation detection device 48 and the second manipulation detection device 44 can prevent misrecognition and accurately perform an operation that matches the user's manipulation intention.

In particular, if the first manipulation detection device 48 is a device that detects the proximity of a user and the second manipulation detection device 44 is a device that operates by knocking or touching the front surface of the door, this effect can be further emphasized.

For example, when a user knocks on the front surface of the door 21', the second manipulation device can detect this and turn on the door light 27 to allow the rear space of the door 21' to be seen through.

At this time, the first manipulation detection device 48 that detects the proximity of the user is not directed toward the front of the door 21' where the user is positioned, but rather senses toward the side of the door 21'. Accordingly, even if the user approaches the front of the refrigerator 1 to operate the second manipulation detection device 44, unintended operations such as the door opening device 36 being operated due to misrecognition of the first manipulation detection device 48 can be prevented.

In this way, considering the user manipulation detection characteristics of the first manipulation detection device 48 and the second manipulation detection device 44, the first manipulation detection device 48 and the second manipulation detection device 44 are arranged to sense in different directions, thereby improving the user convenience and ensuring manipulation reliability. Meanwhile, the electrical wire 47 of the cabinet 10' can pass through the hinge mounting part 331 and the hinge 201 and be introduced into the interior of the upper door 21'. Then, the electrical wire can be extended along the upper part and the side end of the upper door 21' and connected to the PCB 41'. At this time, the first manipulation detection device 48 and the second manipulation detection device 44 can be supplied with power and transmit signals through the electrical wire 47 connected to the PCB 41'.

## Claims

1. A refrigerator comprising:
a cabinet (10) having a storage space;
a door (20) opening and closing the storage space; and
a hinge (201) connecting the door (20) and the cabinet (10),
wherein the door (20) includes:
a front panel (311) forming a front surface of the door (20) and allowing light to pass through;
a door liner (32) provided at a rear of the front panel (311) and forming a rear surface of the door (20);
an upper cap (33) forming an upper surface of the door (20) and to which the hinge (201) is coupled;
a first manipulation detection device (45) provided inside the door (20) and detecting the proximity of a user; and
a second manipulation detection device (44) provided inside the door (20) and detecting the operation of a user,
wherein a PCB (41) on which both the first manipulation detection device (45) and the second manipulation detection device (44) are mounted is provided inside the door (20), and
wherein an electrical wire (47) connected to the PCB (41) is guided to the outside of the door (20) through the hinge.

2. The refrigerator of claim 1, wherein the first manipulation detection device (45) is a capacitance sensor that detects the proximity of a user's body, and
wherein the second manipulation detection device (44) is a vibration detection sensor that detects the user's knocking manipulation.

3. The refrigerator of claim 2, wherein the capacitance sensor and the vibration detection sensor are arranged toward the front panel (311).

4. The refrigerator of any one of the preceding claims, wherein the door (20) is provided with an opening device (36) for restraining and releasing the door (20), and
wherein the opening device (36) operates according to a signal from the first manipulation detection device (45).

5. The refrigerator of any one of the preceding claims, wherein the door liner (32) includes a PCB opening (380) in which the PCB (41) is exposed rearward, and
wherein a PCB cover (46) that shields the PCB (41) and the PCB opening (380) is mounted on the PCB opening (380).

6. The refrigerator of claim 5, wherein the PCB (41) includes a connector (42) to which the electrical wire (47) is detachably connected and a service connector (43) for checking the states of the PCB (41) and the detection devices (45,44), and
wherein the service connector (43) is exposed through the PCB opening (380).

7. The refrigerator of claim 6, wherein the first manipulation detection device (45) and the second manipulation detection device (44) are provided on the front surface of the PCB (41), and
wherein the connector (42) and service connector (43) are provided on the rear surface of the PCB (41).

8. The refrigerator of any one of the preceding claims 5-7, wherein the door liner (32) further includes a gasket groove (322) that is recessed along the perimeter of the rear surface of the door (20) and in which a gasket (323) is mounted,
wherein the PCB opening (380) is arranged to overlap the gasket groove (322), and wherein the PCB cover (46) is formed with a cover stepped part (463) that is connected to the gasket groove (322) and is in contact with the gasket (323).

9. The refrigerator of any one of the preceding claims 5-8, wherein the door liner includes a PCB mounting part (38) that is recessed toward the front panel in the PCB opening (380) to form a space in which the PCB (41) is accommodated.

10. The refrigerator of claim 9, wherein a guide hole (383) is formed on one side of the front surface of the PCB mounting part (38) corresponding to the first manipulation detection device (45),
wherein the first manipulation detection device (45) is located within the guide hole (383), and
wherein the guide hole (383) is shielded by the front panel (311).

11. The refrigerator of claim 10, wherein a boss (382) is formed on the front surface of the PCB mounting part (38) to which a screw (412) penetrating the PCB (41) is fastened, and
wherein the first manipulation detection device (45) and the guide hole (383) are aligned with each other when the screw is fastened.

12. The refrigerator of any one of the preceding claims, wherein the door includes a panel assembly (31) that shields the opening of the door liner (32) and allows the rear space of the door (20) to be seen through,
wherein the panel assembly (31) includes:
the front panel (311);
a rear panel (312) spaced apart from the front panel (311) and forming the rear surface of the door (20); and
a spacer (314) that is arranged along the perimeters of the front panel (311) and the rear panel (312) and connects between the front panel (311) and the rear panel (312), and
wherein an insulation (300) is arranged along the perimeter of the panel assembly (31) inside the door (20).

13. The refrigerator of claim 12, wherein the door liner (32) includes a PCB mounting part (38) that is recessed forward to form a space in which the PCB (41) is independently positioned from the insulation (300), and
wherein the PCB mounting part (38) is provided between the spacer (314) and the side surface of the door (20).

14. The refrigerator of claim 13, wherein the PCB mounting part (38) is provided on one side of the left and right sides of the panel assembly (31) and formed on one side of the left and right sides farthest from the rotation shaft of the door (20).

15. The refrigerator of any one of the preceding claims, wherein the first manipulation detection device (45) is located at a height of 1 m to 1.5 m from the ground.
